(19) **Europäisches Patentamt / European Patent Office / Office européen des brevets**

(11) **EP 4 691 974 A1**

(12) **EUROPEAN PATENT APPLICATION**
published in accordance with Art. 153(4) EPC

(43) Date of publication:
**11.02.2026 Bulletin 2026/07**

(21) Application number: **24784840.1**

(22) Date of filing: **29.03.2024**

(51) International Patent Classification (IPC):
**C01B 21/072** *(2006.01)*

(52) Cooperative Patent Classification (CPC):
**C01B 21/072**

(86) International application number:
**PCT/JP2024/013056**

(87) International publication number:
**WO 2024/210054 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 JP 2023062478**

(71) Applicant: **TOKUYAMA CORPORATION**
**Yamaguchi 745-8648 (JP)**

(72) Inventors:
- **FUKUNAGA, Yutaka**
  **Shunan-shi, Yamaguchi 745-8648 (JP)**
- **TAKAKUSAKI, Makoto**
  **Shunan-shi, Yamaguchi 745-8648 (JP)**
- **INAKI, Yoshitaka**
  **Shunan-shi, Yamaguchi 745-8648 (JP)**

(74) Representative: **Dehns**
**10 Old Bailey**
**London EC4M 7NG (GB)**

(54) **ALUMINUM NITRIDE POWDER**

(57) An aluminum nitride powder, in which a cumulative volume 50% particle diameter (D50) in a particle size distribution measured with a laser diffraction scattering-type particle size distribution meter is 0.3 to 1.0 $\mu$m, a proportion of particles of 0.20 $\mu$m or less is 10% or less in volume frequency, a ratio of the D50 to an average primary particle diameter (Dp: $\mu$m) of 500 particles observed with a scanning electron microscope at a magnification of 20,000 times, D50/Dp, is 1.0 to 1.4, and an average circularity is 0.7 or more.

EP 4 691 974 A1

**Description**

Technical Field

The present invention relates to a novel aluminum nitride powder. Specifically, the present invention provides a submicron-sized aluminum nitride powder suitable for filler applications.

Background Art

In recent years, downsizing and performance enhancement of electronic components have progressed, and performance degradation of semiconductor devices due to heat generation during operation has been a problem. As one of the countermeasures, there is a method of releasing heat from a heat generating portion to a cooling member such as a heat sink or a housing. In order to efficiently release heat from the heat generating portion, it is necessary to enhance the adhesion between the heat generating portion and the cooling member. Therefore, a heat dissipation material such as a heat dissipation sheet or heat dissipation grease is generally used between the heat generating portion and the cooling member. These heat dissipation materials are required to have a high thermal conductivity in addition to adhesion.

However, since a resin material constituting the sheet or the grease has a low thermal conductivity, it is necessary to pack a material having a high thermal conductivity as a filler to increase the thermal conductivity as a composite material in heat dissipation applications. A metal powder, graphite, or the like is packed in applications that do not require high insulation, and alumina, boron nitride, aluminum nitride, or the like is packed in applications that require insulation.

In the packing of the filler, if the filler to be packed has a single particle diameter, the viscosity increases and high packing cannot be achieved. Therefore, it is common to make a design such that a plurality of fillers having different particle diameters in a range of submicrons to several hundreds microns are blended to bury gaps between large particles with small particles. Therein, the role of a fine filler having a particle diameter in a submicron range is very important in order to fill fine gaps between the fillers and increase the thermal conductivity of the heat dissipation material. Among the fillers described above, the development of an aluminum nitride powder having a particle diameter in a submicron range is particularly gaining importance for aluminum nitride which is a material having an excellent thermal conduction property.

Conventionally, as a method for synthesizing a fine aluminum nitride powder having a particle diameter in a submicron range, for example, Patent Literature 1 discloses a method in which heating is performed in an organic aluminum, ammonia gas, and nitrogen atmosphere. Patent Literature 2 discloses an aluminum nitride powder prepared by wet pulverizing an aluminum nitride coarse powder of about several micrometers.

Patent Literature 3 discloses an aluminum nitride powder having a particle diameter of a submicron size and containing no coarse particles.

Citation List

Patent Literature

Patent Literature 1: JP 2007-182340 A
Patent Literature 2: JP 1995-48106 A
Patent Literature 3: WO 2018/164123 A

Summary of Invention

Technical Problem

In the method described in Patent Literature 1, a fine aluminum nitride powder is obtained, but since such a powder has an aggregated structure, there is a problem that when the powder is kneaded into a resin as a filler, the viscosity increases, and it is difficult to achieve high packing. In addition, since the particles have a primary particle diameter of 0.06 $\mu$m or less, the surfaces of the aluminum nitride particles are oxidized and hydrolyzed in the air, and the thermal conductivity of the particles may decrease.

According to Patent Literature 2, aluminum nitride of about 1 $\mu$m can be prepared as a raw material coarse powder, and it is considered that a submicron-sized aluminum nitride powder can also be prepared by further pulverization. However, the powder whose particle diameter is adjusted by pulverization has an amorphous particle shape, and a fine powder of 0.2 $\mu$m or less is generated in a large amount along with pulverization. Therefore, when the powder is kneaded into a resin as a filler, the viscosity increases, and there is a concern that it is difficult to achieve high packing.

The aluminum nitride powder described in Patent Literature 3 is obtained by simply classifying and removing coarse aggregated particles, and particles having an aggregated structure remain. It is described that a crushing treatment is performed before the classification, since the specific surface area of the aluminum nitride powder obtained in examples is relatively high, it is presumed that the crushing mainly destroys the aggregated structure of coarse particles, and many of fine particles exist in a state in which the aggregated structure is maintained. In addition, particles crushed by the pulverization have an angular shape, and there is a concern that such angular particles cause a decrease in the packability in the resin as in Patent Literature 2.

Therefore, an object of the present invention is to provide an aluminum nitride powder suitable for filler applications, which has a submicron size, contains little aggregated particles and fine powders that hinder packing in a resin material, and has a rounded particle shape.

Solution to Problem

Means for solving the above problems include the following aspects.

<1> An aluminum nitride powder, in which a cumulative volume 50% particle diameter (D50) in a particle size distribution measured with a laser diffraction scattering-type particle size distribution meter is 0.3 to 1.0 $\mu$m, a proportion of particles of 0.20 $\mu$m or less is 10% or less in volume frequency, a ratio of the D50 to an average primary particle diameter (Dp: $\mu$m) of 500 particles observed with a scanning electron microscope at a magnification of 20,000 times, D50/Dp, is 1.0 to 1.4, and an average circularity is 0.7 or more.
<2> The aluminum nitride powder according to <1>, in which an oxygen content is 3.0% or less.
<3> The aluminum nitride powder according to <1> or <2>, in which a specific surface area (S: $m^2$/g) with respect to the D50 (um) is 3.5/(D50) or less.

The object of the present invention is achieved by an aluminum nitride powder, in which a cumulative volume 50% particle diameter (D50) in a particle size distribution measured with a laser diffraction scattering-type particle size distribution meter is 0.3 to 1.0 $\mu$m, a proportion of particles of 0.20 $\mu$m or less is 10% or less in volume frequency, a ratio of the D50 to an average primary particle diameter (Dp: $\mu$m) of 500 particles observed with a scanning electron microscope at a magnification of 20,000 times, D50/Dp, is 1.0 to 1.4, and an average circularity is 0.7 or more.

In the aluminum nitride powder of the present invention, an oxygen content is preferably 3.0% or less, and a specific surface area (S: $m^2$/g) with respect to D50 ($\mu$m) is more preferably 3.5/(D50) or less.

Advantageous Effects of Invention

The aluminum nitride powder of the present invention can provide an aluminum nitride powder having a fine particle diameter in a submicron range, almost free of aggregation between particles, and having a rounded particle shape. As a result, when a resin is kneaded together with a filler having a larger particle diameter, the viscosity hardly increases and high packing can be achieved, so that a high thermal conductivity can be imparted to a resin material packed with the filler.

Description of Embodiments

Hereinafter, specific embodiments of the present invention will be described in detail. The description of the contents of the constituent elements described below may be made based on representative embodiments of the present invention, but the present invention is not limited to the following embodiments at all, and can be implemented with appropriate modifications within the scope of the present invention.

In the present description, a numerical range expressed using "to" means a range including numerical values described before and after "to" as a lower limit value and an upper limit value.

In the present description, the term "to" indicating a numerical range means that the unit described either before or after "to" indicates the same unit unless otherwise specified.

In the present description, a combination of two or more preferred embodiments is a more preferred embodiment.

<Aluminum nitride powder>

The aluminum nitride powder of the present invention has a cumulative volume 50% particle diameter (D50) of 0.3 to 1.0 $\mu$m in a particle size distribution measured with a laser diffraction scattering-type particle size distribution meter. Since the aluminum nitride powder has a particle diameter of a submicron size, when used in combination with particles having a larger particle diameter, high packing in a resin can be achieved in combination with the fact that the amount of a fine powder is small, there is no aggregation, and the circularity is high (the average circularity described later is 0.7 or more), which will be described later. The measurement with the laser diffraction scattering-type particle size distribution meter is specifically described in examples.

In the aluminum nitride powder of the present invention, the proportion of particles of 0.20 $\mu$m or less is 10% or less, preferably 5% or less, and more preferably 3% or less in volume frequency. In a case where the proportion of particles of 0.20 $\mu$m or less is more than 10% in volume frequency, when the aluminum nitride powder is packed in a resin, the viscosity increases sharply, and the kneadability deteriorates, and thus high packing becomes difficult. The lower limit value of the proportion of particles of 0.20 $\mu$m or less is not particularly limited, but is preferably 0% or more.

Here, the volume frequency of the proportion of particles of 0.20 $\mu$m or less can be determined by calculating the proportion of particles of 0.20 $\mu$m or less from a particle size distribution curve obtained by measurement with the laser diffraction scattering-type particle size distribution meter.

Furthermore, in the aluminum nitride powder of the present invention, the ratio of D50 to the average primary particle diameter (Dp: $\mu$m) of 500 particles observed with a scanning electron microscope at a magnification of 20,000 times, D50/Dp, is 1.0 to 1.4, preferably 1.0 to 1.3, and more preferably 1.0 to 1.2. The D50/Dp indicates a ratio of D50 measured with a laser diffraction scattering-type particle size distribution meter to the average primary particle diameter, and is an index indicating an existence proportion of aggregated particles in the aluminum nitride powder. The closer the value is to 1, the smaller the number of aggregated particles is. Since the aluminum nitride powder of the present invention has such a value of 1.0 to 1.4, the number of aggregated particles is extremely small, and the aluminum nitride powder is formed of single particles having the average primary particle diameter at a high ratio. Therefore, an increase in viscosity caused by the aggregated particles when the aluminum nitride powder is packed in a resin is extremely small, and the aluminum nitride powder of the present invention can contribute to high packing in the resin.

Furthermore, the aluminum nitride powder of the present invention has an average circularity of 0.7 or more, preferably 0.8 or more. That is, particles constituting the aluminum nitride powder of the present invention have a shape close to a sphere and can exhibit high fluidity, and therefore when the aluminum nitride powder is packed in a resin together with other particles having a large particle diameter, the particles can easily move through gaps between the other particles and the resin, so that the packability of the aluminum nitride powder in the resin can be enhanced. On the other hand, in the conventional technique, the aluminum nitride powder whose particle diameter is adjusted by crushing includes amorphous particles, and the average circularity thereof is less than 0.6.

Although the circularity will be described in detail in examples below, the aluminum nitride powder was observed using a scanning electron microscope (SEM), and a circularity calculated from the area and perimeter of a projected particle at 50% of the cumulative distribution based on the volume frequency was defined as the average circularity. The cumulative distribution based on the volume frequency was obtained by approximating the volume of the primary particle to a sphere whose diameter is the longest diameter of the primary particle.

The upper limit value of the average circularity is not particularly limited, but is preferably 1 or less.

In the aluminum nitride powder of the present invention, other physical properties are not particularly limited, but for example, the specific surface area (S: m$^2$/g) with respect to D50 ($\mu$m) is preferably in a range of 3.5/(D50) or less. Since the width of the optimum specific surface area changes depending on the particle diameter, the range is corrected by (D50: $\mu$m).

The range of the specific surface area calculated from the formula by the (D50) indicates the presence of fine particles and the complexity of particles. In addition, in a case where the specific surface area is within the above range, it is assumed that particles are hardly formed of aggregates of fine particles, particles are easily rounded, the number of particles having a complicated shape is small, and a fine powder generated by crushing or the like is reduced. Therefore, when the aluminum nitride powder is packed in a resin, the viscosity hardly increases, and the packability in the resin is improved. The specific surface area may be 2.0/(D50) or more, particularly 2.2/(D50) or more.

In the aluminum nitride powder of the present invention, the oxygen content is preferably 3.0 mass% or less, and more preferably 2.5 mass% or less. That is, when the oxygen content is 3.0 mass% or less, oxygen hardly forms a solid solution in an aluminum nitride crystal, an oxide film is hardly formed thick on the particle surface, and the thermal conductivity of the particle tends to be improved.

[Mode of use of aluminum nitride powder of present invention]

Since the aluminum nitride powder of the present invention has the above-mentioned properties, it is possible to achieve packing in a resin at a high packing rate by using the aluminum nitride powder in combination with another filler having a larger particle diameter.

Specifically, the aluminum nitride powder of the present invention is useful, for example, in combination with a large particle diameter filler having a particle diameter of 2 to 20 $\mu$m. Of course, it is also possible to use a powder having a larger particle diameter than the large particle diameter filler in combination, and it is possible to appropriately determine and use the composition in which these powders are densely packed.

As the resin to be packed with the aluminum nitride powder of the present invention, a known resin is used without particular limitation.

<Method for producing aluminum nitride powder>

A method for producing an aluminum nitride powder of the present invention is not particularly limited, and typical examples of the production method include a production method including a reduction nitriding step of heating a raw material mixture containing an alumina powder and a carbon powder in a nitrogen atmosphere to reduce and nitride alumina and obtain an aluminum nitride powder, a crushing step of subjecting the aluminum nitride powder containing a carbon powder obtained in the reduction nitriding step to a crushing treatment, a refiring step of heating the aluminum nitride powder containing carbon obtained in the crushing step at a temperature of 1400 to 1800°C for 1 to 10 hours in the presence of nitrogen, and a decarbonization step of decomposing and removing carbon from the powder obtained in the heat treatment step.

[Alumina powder]

In the production method, examples of the raw material alumina include alumina having a crystal structure such as $\alpha, \gamma, \theta, \delta, \eta, \kappa$, or $\chi$. Alumina may be used alone or in a mixture of different types. Among the above types of alumina, $\alpha$-alumina and $\gamma$-alumina, which have particularly high reactivity and are easy to control the reaction, are suitably used.

The average particle diameter of alumina can be appropriately set according to the intended particle diameter of the aluminum nitride powder, and is preferably 0.2 to 1.0 $\mu$m, and more preferably 0.3 to 0.9 $\mu$m. When alumina having an average particle diameter of 0.2 $\mu$m or more is used, an aluminum nitride powder having a target particle diameter of a submicron size is easily obtained, and alumina particles are less susceptible to reduction nitriding in a state of being strongly fused with each other in a heating process, so that an increase in aggregated particles that are not crushed by crushing described later is prevented. In addition, when alumina having an average particle diameter of 1.0 $\mu$m or less is used, an intended submicron-sized aluminum nitride powder is more easily obtained.

As the alumina, one having an average circularity of preferably 0.6 or more, more preferably 0.8 or more is used. When fibrous alumina having a low circularity or aggregated alumina having large irregularities is used as a raw material, the shape of alumina is maintained even after the reduction nitriding reaction, and the circularity of the aluminum nitride powder decreases.

[Carbon powder]

In the method for producing an aluminum nitride powder of the present invention, as the raw material carbon powder, a known one is used without particular limitation. Carbon black, graphite, and a carbon precursor that can serve as a carbon source in a reaction gas atmosphere at a high temperature can be used without any limitation. Among them, carbon black is suitable as the carbon powder from the viewpoint of the amount of carbon per weight and the stability of physical properties. The particle diameter of such carbon black is arbitrary, but is preferably 5 to 250 nm, and more preferably 10 to 100 nm. When the particle diameter of the carbon black is 5 nm or more, the powder is less likely to be bulky, and the productivity is improved. When the particle diameter of the carbon black is 250 nm or less, carbon particles can be uniformly adhered to an alumina particle surface, so that the generation of aggregated particles is prevented. In order to prevent scattering of the raw material, a liquid carbon source such as liquid paraffin may be used in combination.

[Mixing step]

In the method for producing an aluminum nitride powder of the present invention, as a method for mixing an alumina powder and a carbon powder, any method may be used as long as alumina particles are dispersed and the carbon powder uniformly adheres to a particle surface, and as a mixing unit, mixing with a blender, a mixer, or a ball mill is usually preferred. The alumina powder and the carbon powder may be mixed in a dry manner, or may be mixed in a wet manner using an organic solvent or the like.

In the method for producing an aluminum nitride powder of the present invention, the carbon powder is preferably blended in an amount of 45 parts by mass or more, more preferably 60 parts by mass or more, and still more preferably 70 parts by mass or more with respect to 100 parts by mass of the alumina powder in terms of carbon. When the carbon amount is 45 parts by mass or more in terms of carbon, unreacted alumina is less likely to remain, the release between alumina and aluminum nitride particles becomes sufficient, and the occurrence of aggregation during firing is prevented.

On the other hand, when the carbon amount is increased, there is no big problem in the obtained aluminum nitride powder, and rather, there is an effect that strong aggregation of the generated aluminum nitride particles can be prevented, and in the crushing step described later, a portion bonded by aggregation can prevent the emergence of a fracture surface (plane). The upper limit of the carbon amount is preferably 1000 parts by mass, more preferably 700 parts by mass, and still more preferably 500 parts by mass in consideration of the above circumstances and time and effort in the decarbonization step described later.

[Reduction nitriding step]

In the aluminum nitride powder of the present invention, a known reduction nitriding method in which a mixture of an alumina powder and a carbon powder is heated under nitrogen flow to allow a reduction nitriding reaction to proceed can be adopted without particular limitation. For example, the heating temperature is not particularly limited, but is preferably 1400 to 1800°C, and more preferably 1500°C to 1750°C. When the temperature is 1400°C or higher, the nitriding reaction sufficiently proceeds, so that unreacted alumina can be reduced. In addition, when the firing temperature is 1800°C or lower, sintering between particles hardly occurs, so that the generation of an aggregated powder is prevented. The time for the reduction nitriding is not limited, and is preferably 1 to 10 hours, and more preferably 3 to 8 hours. The flow rate of the nitrogen gas is not particularly limited as long as alumina is sufficiently reduced and nitrided, and may be appropriately determined in consideration of the type of alumina to be used, the capacity of the reactor, the structure of the apparatus, and the like.

[Crushing step]

The crushing of the powder after the reduction nitriding step is preferably performed under a condition in which the aggregated aluminum nitride particles are pulverized into single particles and the primary particles are not pulverized. As such conditions, an experiment may be performed in advance according to a pulverizer to be used, and the optimum conditions may be determined. In the pulverization, a known apparatus is used without particular limitation, and representative examples thereof include a ball mill, a jet mill, and a bead mill.

[Refiring step]

In the crushing step, by crushing the aggregated particles obtained after the reduction nitriding, a portion bonded by aggregation may exist as a fracture surface (plane). In such a case, it is preferred to perform a treatment for rounding the fracture surface in order to further improve the circularity of the particles.
In the refiring step, by heating the powder after crushing at a temperature of 1400 to 1800°C under nitrogen flow, the fracture surface of the particle which may be generated in the crushing step can be rounded. Furthermore, the oxide film on the particle surface generated during crushing can also be removed by a reduction nitriding reaction. The refiring time is preferably 1 to 10 hours, and more preferably 3 to 5 hours.
The refiring is preferably performed in the presence of carbon. Therefore, when the mixed state of aluminum nitride and carbon after crushing is non-uniform, it is preferred to perform mixing again using the apparatus used in the mixing step before the refiring step. In addition, in order to replenish the carbon powder reduced in the reduction nitriding step, a carbon powder may be additionally added.

[Decarbonization step]

In the present invention, since excessive carbon is contained in the powder after the refiring step, the powder is decarbonized by heating in an oxidizing gas. As the oxidizing gas, any gas that can oxidize and remove carbon, such as air or oxygen, can be adopted without any limitation, but air is suitable in consideration of economic efficiency and the oxygen content of aluminum nitride to be obtained. The heating temperature is generally preferably 500 to 900°C, and more preferably 600 to 750°C. When the heating temperature is 900°C or lower, the surface of the aluminum nitride powder is not excessively oxidized, so that the thermal conduction of particles is improved, sintering hardly occurs between particles, and the generation of an aggregated powder is prevented. When the heating temperature is 500°C or higher, carbon can be sufficiently removed.

[Crude powder removing step]

In the production method, when coarse particles are contained in the powder after the decarbonization step, the coarse particles may be removed by classification. A classification method is not particularly limited, and examples thereof include air flow classification using an inertial force or a centrifugal force, and wet filter classification in which coarse particles are removed through a filter.

Examples

Hereinafter, the present invention will be further specifically described, but the present invention is not limited to these examples. Various physical properties in examples and comparative examples were measured by the following methods.

(1) Particle diameter

"D 50"

A dispersion liquid obtained by placing an aluminum nitride powder (0.01 g) and ion-exchanged water (100 mL) in a glass beaker having a volume of 100 mL, and performing ultrasonic irradiation at 200 W for 3 minutes with a probe immersed 4 cm to disperse the aluminum nitride powder was subjected to measurement using a laser diffraction scattering-type particle size distribution meter (MT 3300EX II manufactured by MicrotracBEL Corp.). In the particle size distribution, the volume frequency was accumulated from the smaller particle diameter, and the particle diameter at which the accumulated value was 50% was defined as D50.

"Dp"

The aluminum nitride powder was sprinkled on a conductive carbon tape fixed to a sample stage, and gold was deposited by a sputtering method to prepare a sample for observation. The sample was observed under the condition of a magnification of 20,000 times using a scanning electron microscope (SEM), and a particle diameter R (longest diameter) of 500 primary particles was arbitrarily measured. A volume average primary particle diameter Dp was obtained by approximating the volume of the primary particle to a sphere having the particle diameter R as a diameter.

"Proportion of particles of 0.20 $\mu$m or less"

Similarly to D50, a dispersion liquid in which an aluminum nitride powder was dispersed was subjected to measurement using a laser diffraction scattering-type particle size distribution meter, and the volume frequencies of particles detected in a range of 0.02 to 0.20 $\mu$m were added to determine the proportion of particles of 0.20 $\mu$m or less.
A case where the proportion of particles of 0.20 $\mu$m or less is more than 10% was rated "X", a case where the proportion is more than 5% and 10% or less was rated "O", and a case where the proportion is 5% or less was rated "OO".

(2) Specific surface area

In the measurement of the BET specific surface area of an aluminum nitride powder, the determination was made by a BET method (a one-point method for nitrogen adsorption) using a specific surface area analyzer (manufactured by SHIMADZU CORPORATION, Flow Sorb 2-2300 type). In the measurement, 2 g of an aluminum nitride powder was used, and an aluminum nitride powder previously subjected to a drying treatment at 100°C for 1 hour in a nitrogen gas flow was used for the measurement.

(3) Average circularity

An aluminum nitride powder was sprinkled on a conductive carbon tape fixed to a sample stage, and gold was deposited by a sputtering method to prepare an observation sample. The sample was observed at a magnification of 20,000 times using a scanning electron microscope (SEM), and calculation was performed as the ratio of the area of a particle image projected for each particle (projected image area) to the square of the perimeter of the particle image (projected image perimeter) (area circularity). The circularity at 50% of the cumulative distribution based on the volume frequency was defined as the average circularity.

Circularity = $4 \times \pi \times$ projected image area/(projected image perimeter)$^2$

When a mold release material and the like were contained in addition to the aluminum nitride powder, the calculation was performed by excluding them.

(4) Oxygen concentration

An aluminum nitride powder was burned in an oxygen stream using "EMGA-620W" manufactured by HORIBA, Ltd., and the oxygen concentration was quantified from the amount of generated CO gas.

(5) Viscosity

In order to evaluate the properties of an aluminum nitride powder as a filler, the viscosity of a resin composition obtained by kneading the aluminum nitride powder with a thermosetting silicone resin (TSE3070(A) manufactured by Momentive Performance Materials Japan LLC) was measured. A powder having good packability is expected to have an effect of decreasing the viscosity.

In addition to the aluminum nitride powder of the present invention, alumina fillers having particle diameters of 30 $\mu$m, 10 $\mu$m, and 3 $\mu$m were blended, and evaluation was performed. These were added by setting the blending ratio as follows: 30 $\mu$m : 10 $\mu$m : 3 $\mu$m : aluminum nitride powder = 10 : 6 : 6 : 4 (vol%) in an amount of 50 vol% with respect to the resin. A paste for measurement was prepared by repeating an operation of kneading of the resin and the fillers for 3 minutes with an automatic mortar machine and scraping three times. In the measurement of the viscosity, a rheometer (Discovery HR-2 manufactured by TA Instrument) was used. The viscosity was measured using a 40 mm flat plate under the conditions of a gap of 1000 $\mu$m and a temperature of 25°C, and the viscosity at a shear rate of 1.0 s$^{-1}$ was compared.

The viscosity of a paste in which the aluminum nitride of the present invention was not added and alumina fillers having particle diameters of 30 $\mu$m, 10 $\mu$m and 3 $\mu$m were blended at a ratio of 10 : 6 : 6 in an amount of 50 vol% with respect to the resin was 88 Pa·s.

Example 1

One hundred parts by mass of $\alpha$-alumina having an average particle diameter of 0.4 $\mu$m and 100 parts by mass of carbon black having an average particle diameter of 20 nm were mixed using a rotating ball mill. The resulting mixed powder was placed in a graphite container, and fired under the conditions of a firing temperature of 1650°C and a firing time of 7 hours while nitrogen gas was circulated at 1 L/min. The fired powder was treated with a counter-type jet mill to disintegrate the aluminum nitride aggregated particles contained in a part. The crushed powder was placed in a graphite container again, and refired under the conditions of a firing temperature of 1650°C and a firing time of 4 hours while nitrogen gas was circulated at 1 L/min, and then fired in an air atmosphere at a firing temperature of 700°C for a firing time of 8 hours to remove the carbon powder contained in the refired powder to obtain an aluminum nitride powder.

The results of measuring the particle diameter, specific surface area, oxygen concentration, average circularity, and viscosity of the obtained powder by the above-described methods are shown in Table 1. As compared with the resin composition (paste) prepared without blending the aluminum nitride of the present invention, the viscosity was decreased, and improvement of the packability could be verified.

Example 2

An aluminum nitride powder was obtained in the same manner as in Example 1 except that the average particle diameter of the raw material alumina was changed to 0.65 $\mu$m. The results of measuring the particle diameter, specific surface area, oxygen concentration, average circularity, and viscosity of the obtained powder are shown in Table 1.

Example 3

An aluminum nitride powder was obtained in the same manner as in Example 1 except that the firing temperature in the reduction nitriding step was changed to 1550°C and the firing time was changed to 10 hours. The results of measuring the particle diameter, specific surface area, oxygen concentration, average circularity, and viscosity of the obtained powder are shown in Table 1.

Example 4

An aluminum nitride powder was obtained in the same manner as in Example 1 except that the firing temperature in the reduction nitriding step was changed to 1750°C and the firing time was changed to 5 hours. The results of measuring the particle diameter, specific surface area, oxygen concentration, average circularity, and viscosity of the obtained powder are shown in Table 1.

Comparative Example 1

An aluminum nitride powder was obtained in the same manner as in Example 1 except that the firing temperature in the reduction nitriding step was changed to 1850°C and the firing time was changed to 5 hours. The results of measuring the particle diameter, specific surface area, oxygen concentration, average circularity, and viscosity of the obtained powder are shown in Table 1.

Comparative Example 2

An aluminum nitride powder was obtained in the same manner as in Example 1 except that the addition amount of the carbon powder with respect to 100 parts by mass of the alumina powder was changed to 40 parts by mass in the mixing step. The results of measuring the particle diameter, specific surface area, oxygen concentration, average circularity, and viscosity of the obtained powder are shown in Table 1.

Comparative Example 3

One hundred parts by mass of an aluminum powder having an average particle diameter of 20 $\mu$m and 200 parts by mass of an aluminum nitride powder having an average particle diameter of 1.0 $\mu$m were mixed using a rotating ball mill. The resulting mixed powder was placed in a graphite container, which was placed in a reaction vessel. The reaction vessel was degassed to a predetermined pressure, and then the powder was energized and ignited in a state where nitrogen was introduced to a pressure of 40 atm to directly cause a nitriding reaction. The obtained massive aluminum nitride was pulverized at 350 rpm for 30 minutes by a planetary ball mill using an alumina pot and alumina balls to obtain an aluminum nitride powder. The results of measuring the particle diameter, specific surface area, oxygen concentration, average circularity, and viscosity of the obtained powder are shown in Table 1.

[Table 1]

|  | Example 1 | Example 2 | Example 3 | Example 4 | Comparative Example 1 | Comparative Example 2 | Comparative Example 3 |
|---|---|---|---|---|---|---|---|
| D50 ($\mu$m) | 0.55 | 0.78 | 0.52 | 0.61 | 0.95 | 1.10 | 0.75 |
| D50/Dp | 1.1 | 1.1 | 1.1 | 1.2 | 1.4 | 1.5 | 1.6 |
| Proportion of particles of 0.20 $\mu$m or less | OO | OO | O | OO | OO | OO | X |
| Specific surface area (m$^2$/g) | 5.1 | 3.6 | 5.6 | 4.9 | 2.9 | 3.3 | 5.2 |
| Oxygen concentration (0%) | 2.3 | 1.5 | 2.4 | 1.9 | 1.1 | 1.2 | 3.3 |
| Circularity | 0.78 | 0.81 | 0.83 | 0.80 | 0.64 | 0.51 | 0.55 |
| Viscosity (Pa ·s) | 51 | 63 | 42 | 47 | 78 | 82 | 210 |

In Table 1, "Circularity" denotes an average circularity value.

**Claims**

1. An aluminum nitride powder, wherein

   a cumulative volume 50% particle diameter (D50) in a particle size distribution measured with a laser diffraction scattering-type particle size distribution meter is 0.3 to 1.0 $\mu$m,
   a proportion of particles of 0.20 $\mu$m or less is 10% or less in volume frequency,

a ratio of the D50 to an average primary particle diameter (Dp: μm) of 500 particles observed with a scanning electron microscope at a magnification of 20,000 times, D50/Dp, is 1.0 to 1.4, and an average circularity is 0.7 or more.

2. The aluminum nitride powder according to claim 1, wherein an oxygen content is 3.0% or less.

3. The aluminum nitride powder according to claim 1, wherein a specific surface area (S: m$^2$/g) with respect to the D50 (μm) is 3.5/(D50) or less.

## INTERNATIONAL SEARCH REPORT

| International application No. |
| --- |
| **PCT/JP2024/013056** |

**A. CLASSIFICATION OF SUBJECT MATTER**

*C01B 21/072*(2006.01)i

FI:  C01B21/072 G

According to International Patent Classification (IPC) or to both national classification and IPC

**B. FIELDS SEARCHED**

Minimum documentation searched (classification system followed by classification symbols)

C01B21/072

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/161883 A1 (TOKUYAMA CORPORATION) 19 August 2021 (2021-08-19) claims, paragraphs [0010]-[0012], [0018], [0024], example 3, table 1 | 1-3 |
| A | WO 2018/164123 A1 (TOKUYAMA CORPORATION) 13 September 2018 (2018-09-13) entire text | 1-3 |
| A | JP 2019-147709 A (TOKUYAMA CORPORATION) 05 September 2019 (2019-09-05) entire text | 1-3 |
| A | CN 115448265 A (DALIAN MARITIME UNIVERSITY) 09 December 2022 (2022-12-09) entire text | 1-3 |
| A | JP 2008-280217 A (TOKUYAMA CORPORATION) 20 November 2008 (2008-11-20) entire text | 1-3 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 June 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/013056**

| Patent document cited in search report | | | Publication date (day/month/year) | Patent family member(s) | | | Publication date (day/month/year) |
|---|---|---|---|---|---|---|---|
| WO | 2021/161883 | A1 | 19 August 2021 | US 2023/0080620 A1 claims, paragraphs [0010]-[0012], [0027], [0036]-[0042], example 3, table 1 | | | |
| | | | | EP | 4105174 | A1 | |
| | | | | CN | 115066392 | A | |
| | | | | KR | 10-2022-0138379 | A | |
| | | | | TW | 202138291 | A | |
| WO | 2018/164123 | A1 | 13 September 2018 | US 2019/0389725 A1 entire text | | | |
| | | | | EP | 3594178 | A1 | |
| | | | | CN | 110088039 | A | |
| | | | | KR | 10-2019-0120747 | A | |
| | | | | TW | 201838914 | A | |
| JP | 2019-147709 | A | 05 September 2019 | (Family: none) | | | |
| CN | 115448265 | A | 09 December 2022 | (Family: none) | | | |
| JP | 2008-280217 | A | 20 November 2008 | (Family: none) | | | |

Form PCT/ISA/210 (patent family annex) (July 2022)

**EP 4 691 974 A1**

**REFERENCES CITED IN THE DESCRIPTION**

**Patent documents cited in the description**

- JP 2007182340 A
- JP 7048106 A
- WO 2018164123 A